# EUROPEAN PATENT SPECIFICATION

(11) **EP 0 804 957 B1**
(45) Date of publication and mention of the grant of the patent: **16.01.2002**
(21) Application number: 97303030.7
(22) Date of filing: 02.05.1997
(51) Int. Cl.: B01D 35/30

(54) **Filter head**
Befestigungskopf für Filter
Tête de fixation de filtre

(30) Priority: 03.05.1996 GB 9609385; 21.09.1996 GB 9620003
(43) Date of publication of application: 05.11.1997
(73) Proprietor: Delphi Technologies, Inc., Troy, MI 48098 (US)
(72) Inventor: Bradford, Peter Francis, Sheerness, Kent, Me12 3HX (GB)
(74) Representative: Pople, Joanne Selina

(56) References cited:
- FR-A- 2 010 086
- GB-A- 2 115 305
- US-A- 5 354 464

## Description

This invention relates to a filter head for use with a filter cartridge of the type including a filter medium located within a housing, a surface of the housing being provided with apertures to permit access to one side of the filter material. The housing is provided with a through passage communicating with the other side of the filter material.

The filter head sealingly engages the cartridge, in use, the head having an inlet port and an outlet port which communicate with the apertured surface and passage of the cartridge. Depending upon the use of the filter, the head may also include other ports, and possibly a priming arrangement for priming the filter. In order to meet the varying requirements for different uses, a variety of different filter heads are required.

By way of background to the present invention, US 5354464 describes a filter head for use with a filter cartridge in which regions of the filter head are provided with openings to permit communication between inlet and outlet ports and chambers of the filter head so as to provide a number of different flow paths through the filter head. However, the number of different flow paths which can be provided through the filter head is limited. Also by way of background to the present invention, FR 2010086 discloses a filter head which provides only a single flow path for fuel through the filter head. The filter head in FR 2010086 is therefore only suitable for use in a limited number of applications.

It is an object of the invention to provide a filter head suitable for use in a variety of fuel systems.

According to the present invention, there is provided a filter head for use with a filter cartridge, the filter head comprising a plurality of ports, a first chamber and a second chamber, the second chamber being arranged to communicate with an axially extending passage of the filter cartridge, the filter head comprising means in a region located beneath the first chamber which is adaptable to permit selective communication between the first chamber and the surface of the cartridge, selective communication between at least one of the ports and the first chamber, and selective communication between at least one of the ports and the second chamber.

The filter head may further comprise means for permitting selective communication between the first chamber and the second chamber.

By permitting communication between selected ones of the ports and chambers and between the chambers and the filter cartridge, a variety of flow paths through the filter are possible thus increasing the range of possible uses for the filter head.

The invention will further be described, by way of example, with reference to the accompanying drawings, in which:-
Figure 1 is a plan view of a filter head in accordance with an embodiment of the invention;
Figures 2 to 8 are views similar to Figure 1 illustrating various possible fuel flow paths;
Figure 9 is a side view of the filter head of Figure 1;
Figures 10 and 27 illustrate an alternative embodiment;
Figures 11 to 15 are diagrammatic cross-sectional views of filter heads in accordance with embodiments of the invention and showing various primer arrangements;
Figures 16a, 16b and 16c illustrate part of a primer suitable for use in the filter head of Figure 1;
Figure 17 is a perspective view of a filter head in accordance with another embodiment of the invention with a filter cartridge secured thereto;
Figure 18 is an enlarged perspective view of the filter head of Figure 17 with the primer arrangement thereof removed;
Figure 19 is a plan view of the filter head shown in Figure 18;
Figure 20 is a diagrammatic sectional view of the filter head;
Figures 21 to 24 are views similar to Figure 20 illustrating various flow paths; and
Figures 25 and 26 are views similar to Figure 19 of two further alternative embodiments.

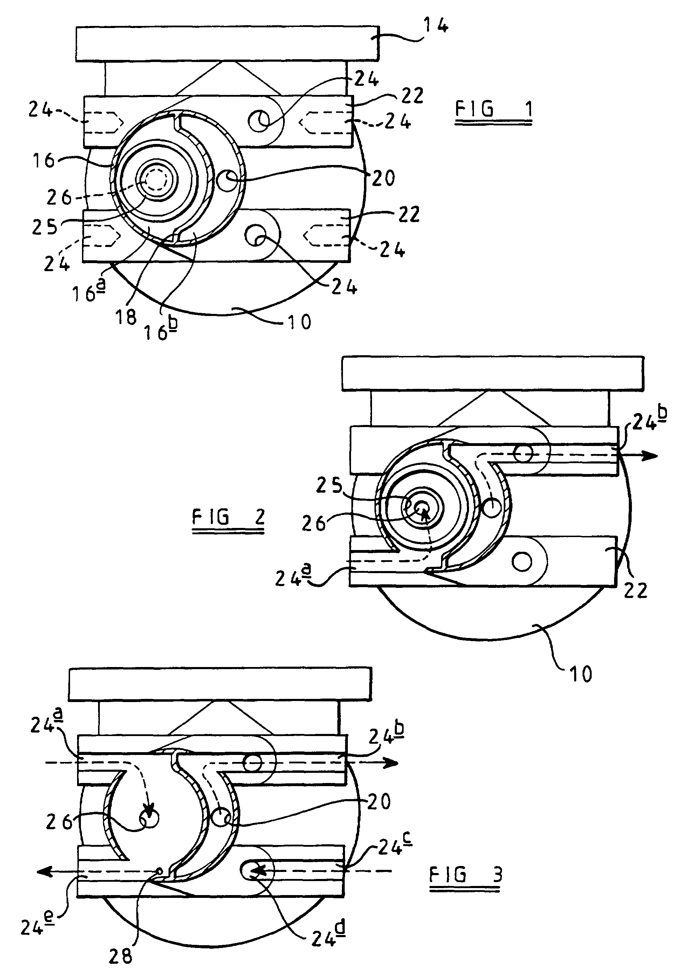

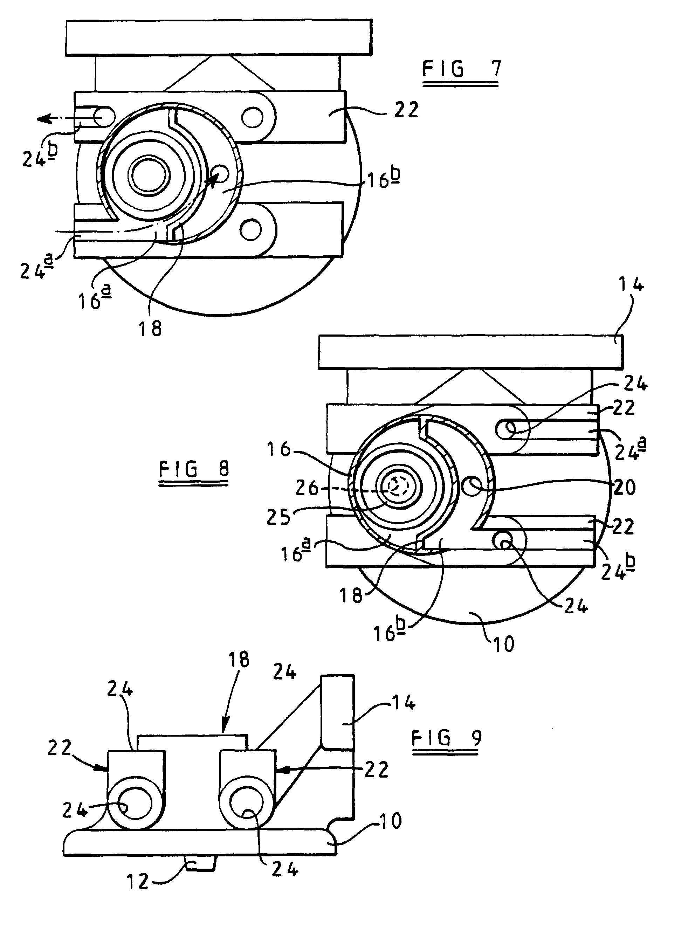

The filter head illustrated in Figures 1 and 9 comprises a generally circular cover 10 having a recess in the lower surface thereof arranged to receive the upper, apertured end surface of a filter cartridge of the type described hereinbefore. The cover 10 is provided with a downwardly extending hollow tubular projection 12 which is intended to communicate, in use, with the through passage of the filter cartridge, suitable seals being provided to seal the projection 12 to the through passage of the cartridge.

As illustrated in Figure 9, the cover 10 is provided with an upstanding mounting bracket 14 which is used to support the filter head, and hence to support the filter cartridge. It will be understood that other mounting techniques may be used in which the bracket 14 is otherwise oriented or omitted.

The upper surface of the cover 10 is shaped to define a chamber 16 of substantially cylindrical form and, as shown in Figure 1, the chamber 16 is not coaxial with the cover 10. The chamber 16 is provided with a dividing wall 18 which is integral with the cover 10, a gasket or blanking piece which may form part of a cap being receivable within the chamber 16 and cooperable with the wall 18 to close the chamber 16 and divide the chamber 16 into first and second sub-chambers 16a, 16b. The cap may include the actuator of a hand primer. The part of the cover 10 defining part of the second sub-chamber 16b is provided with an aperture 20 which communicates with the interior of the projection 12. Thus, in use, the second sub-chamber 16b communicates with the through passage of the filter cartridge.

Also provided on the upper surface of the cover 10 is a pair of parallel ribs 22 which are positioned such that if axially extending bores were provided in the ribs 22, the bores would extend through the chamber 16. As denoted by the dashed lines in Figure 1, the ends of the ribs 22 are pre-drilled to define ports 24, although in the arrangement illustrated in Figure 1, the ports 24 do not communicate with the chamber 16. The upper face of each of the ribs 22 is also drilled to form a further pair of ports 24.

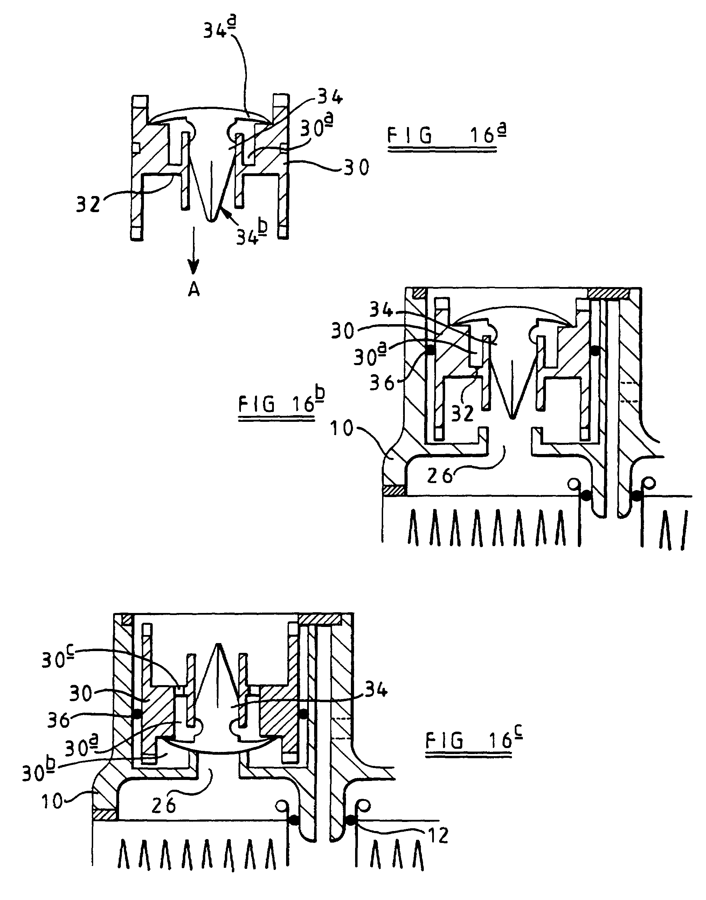

As illustrated in Figure 1, the first sub-chamber 16a is shaped so as to define supporting means 25 suitable for receiving a primer, for example of the type described with reference to Figures 16a, 16b and 16c.

Clearly, the filter head illustrated in Figure 1 is not suitable for use with a filter cartridge as none of the ports 24 communicate with the second sub-chamber 16b, thus fuel is not permitted to flow to or from the through passage of the filter cartridge, and similarly fuel is not permitted to flow to or from the upper, apertured surface of the filter cartridge. In order to prepare the filter head for use, the filter head requires modification to permit communication between at least one of the ports 24 and the second sub-chamber 16b, and further communication between another of the ports 24 and the upper surface of the cartridge. The selection of which of the ports 24 to connect to the second sub-chamber 16b, and which of the ports 24 to be arranged to communicate with the upper surface of the filter cartridge depends upon the intended use of the filter. A non-exhaustive range of possibilities are illustrated in Figures 2 to 8.

In the arrangement illustrated in Figure 2, a first port 24a is drilled to communicate with the first sub-chamber 16a, and an aperture 26 is formed in the surface of the cover 10 defining part of the first chamber 16a thus permitting fuel to flow from a suitable source of fuel to the upper surface of a filter cartridge connected to the filter head. A second port 24b is drilled so as to communicate with the second sub-chamber 16b and thus communicate with the through passage of the filter cartridge. In use, fuel from a fuel source or reservoir is supplied through the first port 24a and the first sub-chamber 16a to the upper surface of the filter cartridge. The fuel flows downwardly through the filter cartridge, through the filter medium, the filtered fuel being returned through the central, through passage to the projection 12 and through the second sub-chamber 16b to the second port 24b. From the second port 24b, the fuel flows to a fuel pump for subsequent supply at high pressure to an engine. Fuel flow in this direction through the filter cartridge is referred to as agglomerator flow. If desired, a primer, for example of the type described with reference to Figures 16a, 16b and 16c may be supported by the supporting means 25 in the first sub-chamber 16a.

Although in the arrangement illustrated in Figure 2, the port 24a is formed in a different one of the ribs 22 to the second port 24b, it will be recognised that these ports could be provided in a single one of the ribs 22, either of the ports 24 which can be arranged to communicate with the first sub-chamber 16a be suitable for connection to the fuel supply, and any of the ports which can be connected to the second sub-chamber 16b being suitable for use for connection to the fuel pump.

The arrangement illustrated in Figure 3 is similar to that of Figure 2 in that a first port 24a is drilled so as to communicate with the first sub-chamber 16a which, as in the embodiment illustrated in Figure 2, is provided with an aperture 26 whereby the first sub-chamber 16a communicates with the upper surface of the filter cartridge. Also as in the embodiment illustrated in Figure 2, a second port 24b is drilled so as to communicate with the second sub-chamber 16b, in this case the second port 24b and first port 24a being provided in the same one of the ribs 22. The flow path of fuel from the source to the fuel pump is therefore similar to that of one of the variants to the embodiment illustrated in Figure 2.

The arrangement of Figure 3 differs from that of Figure 2 in that fuel which is not supplied by the pump to an associated engine is returned to a third port 24c which is drilled so as to communicate with a fourth port 24d (one of the ports 24 provided in the upper face of the ribs 22), the third and fourth ports 24c, 24d communicating through an aperture in the cover 10 with the upper face of the filter cartridge. The fuel returned from the fuel pump is therefore returned to the dirty side of the filter cartridge. The fourth port 24d is connected to an auxiliary device for example in the form of an auxiliary fuel reservoir.

A small aperture 28 is provided in the cover 10 in order to bleed air from the upper surface of the filter cartridge into the first sub-chamber 16a, excess fuel also escaping through this aperture. A fifth port 24e is connected to the first sub-chamber 16a and is arranged to return excess fuel and air from the filter head to the fuel supply reservoir. This arrangement is intended for use where a separate fuel supply pump is used to supply fuel to the filter. By selecting appropriate relative diameters for the first and fifth ports 24a, 24e, the fuel supply pressure to the filter can be maintained at a suitable level.

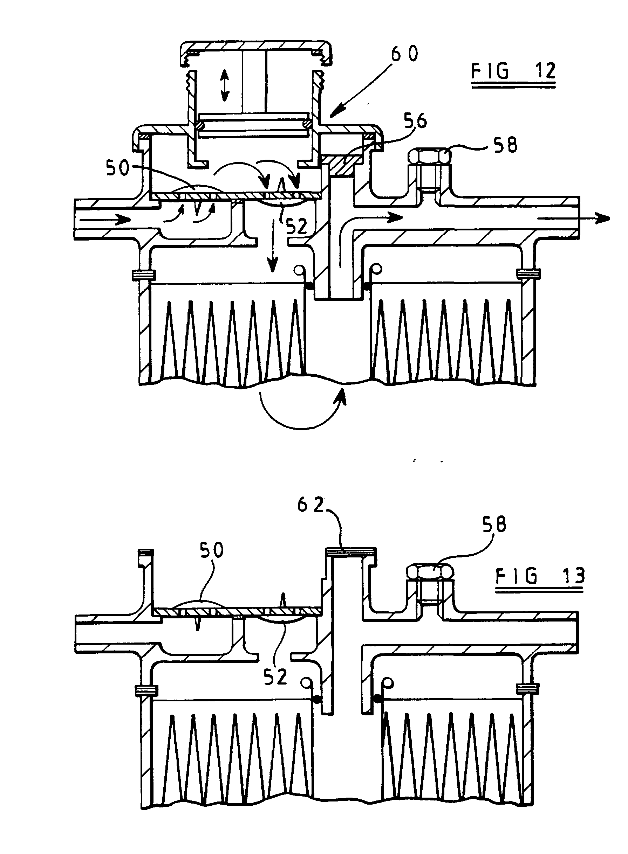

Figure 3 omits to show the support means 25 for the primer, but it will be recognised that such support means could be provided, and hence that a primer for example of the type described with reference to any one of Figures 11 to 16 could be used in this embodiment.

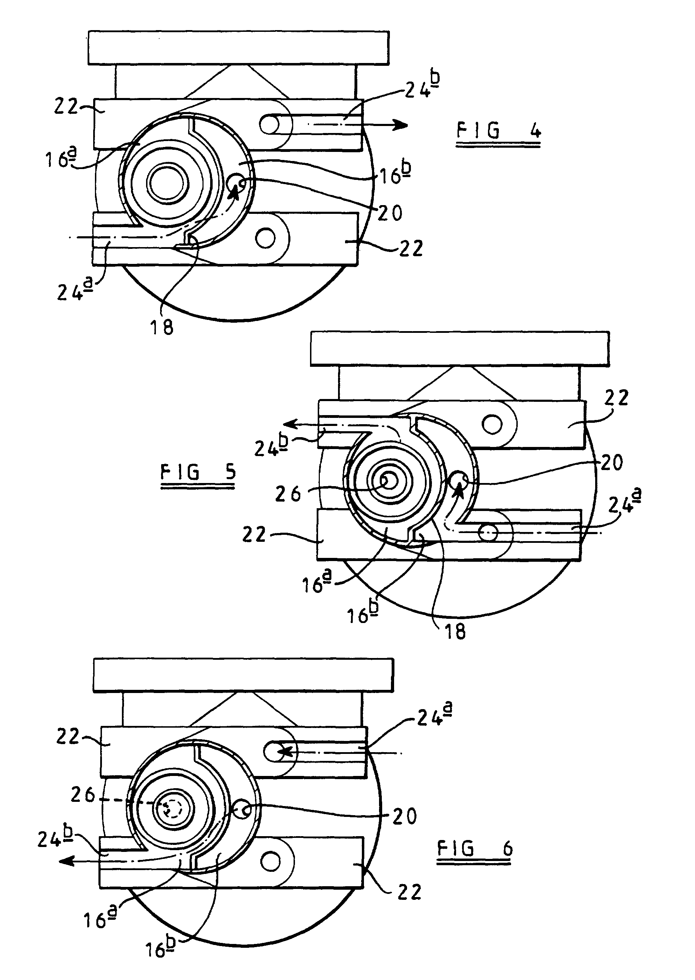

In the arrangement illustrated in Figure 4, a first port 24a is drilled so as to communicate with the first sub-chamber 16a, the gasket or blanking piece which, with the wall 18, separates the first and second sub-chamber 16a, 16b is absent in order to permit fuel to flow from the first sub-chamber 16a to the second sub-chamber 16b and from there through the passage 20 to the through passage of the filter cartridge. The fuel then flows upwardly through the filter medium exiting at the upper surface of the filter cartridge. The aperture 26 is not drilled in this embodiment and hence fuel does not flow from the upper surface of the filter cartridge into the sub-chamber 16a. Instead, a passage is drilled vertically into one of the ribs 22, and a second port 24b provided in that rib 22 is drilled so as to communicate with the vertical drilling. The second port 24b therefore communicates with the upper face of the filter cartridge.

Although the support means 25 is shown, as the aperture 26 is not provided in the cover 10, a primer is not located within the first sub-chamber 16a. The flow of fuel in the direction illustrated in the embodiment of Figure 4 is referred to as filter flow.

The arrangement illustrated in Figure 5 is intended for use where filter flow is required and where fuel is required to be supplied from the right hand side of the filter to the left hand side in the orientation illustrated in Figure 5. In this arrangement, a first port 24a is drilled so as to communicate with the second sub-chamber 16b and hence with the central through passage of the filter cartridge. The aperture 26 is provided in the cover 10, thus the first sub-chamber 16a communicates with the upper surface of the filter cartridge, and a second port 24b is drilled so as to communicate with the first sub-chamber 16a whereby fuel is supplied to a fuel pump. The first sub-chamber 16a is provided with support means 25 for a suitable hand primer.

Figure 6 also illustrates an embodiment in which fuel is required to flow from the right-hand side of the filter assembly to the left-hand side. This embodiment is intended to achieve agglomerator flow, a first, inlet port 24a being drilled so as to communicate with a vertical drilling in the cover 10 which communicates with the upper surface of the filter cartridge. Fuel from a suitable reservoir flows through the inlet port 24a to the upper surface of the filter cartridge, and flows through the filter cartridge exiting along the through passage thereof which communicates through the aperture 20 with the second sub-chamber 16b. As described hereinbefore, the gasket or blanking piece is absent so as to permit communication between the first and second sub-chambers 16a, 16b, a second port 24b being drilled so as to communicate with the first sub-chamber 16a. Fuel flows from the second port 24b to a suitable fuel pump.

It will noted that the aperture 26 is not drilled thus direct communication between the first sub-chamber 16a and the upper surface of the filter cartridge is not permitted.

Figure 7 illustrates a modification in which both the inlet and the outlet are connected to the left-hand side of the filter assembly. In this arrangement, a first port 24a is drilled so as to communicate with the first sub-chamber 16a, the gasket or blanking piece being absent so as to permit communication between the first and second sub-chambers 16a, 16b thus fuel from the first port 24a is permitted to flow to the aperture 20 and from there to the central through passage of the filter cartridge. The fuel flows through the through passage of the filter cartridge and upwardly through the filter medium to the upper surface of the filter cartridge. A second port 24b is drilled so as to communicate with a vertical drilling provided in the cover 10 which is located so as to communicate with the upper surface of the filter cartridge. Filter flow through the filter assembly is therefore achieved. It will be recognised that by reversing the connections to the first and second ports 24a, 24b agglomerator flow may be achieved.

Figure 8 illustrates an arrangement where both the inlet and the outlet are connected to the right-hand side of the filter assembly. A first, inlet port 24a is drilled so as to communicate with a vertically extending passage which communicates with the upper surface of the filter cartridge. A second, outlet port 24b is drilled so as to communicate with the second sub-chamber 16b, and hence to communicate with the through passage of the filter cartridge. By connecting the first port 24a to a suitable reservoir and the second port 24b to a fuel pump, fuel flows through the filter medium in the direction referred to hereinbefore as agglomerator flow. Filter flow may be achieved by reversing the connections to the cover.

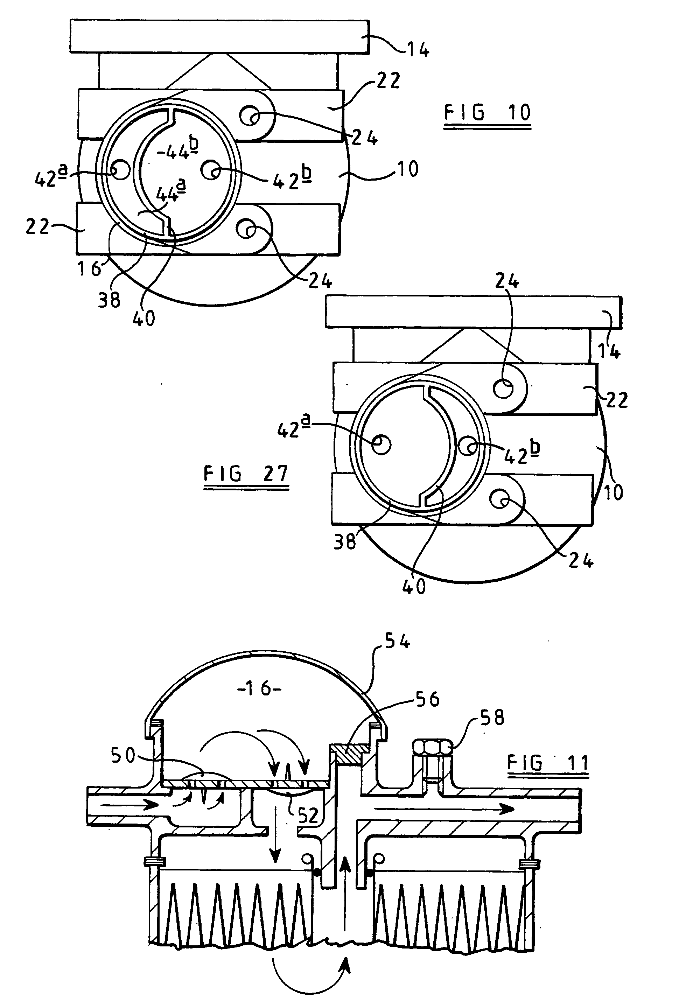

The embodiment illustrated in Figures 10 and 27 differs from that of Figure 1 in that a generally cylindrical insert 38 is provided within the chamber 16 the insert 38 being provided with an integral dividing wall 40. The insert 38 is arranged to carry a primer arrangement.

Figure 10 illustrates that the cover 10 is provided with two aperture locations 42a, 42b. With the insert 38 oriented as illustrated in Figure 10, aperture 42a provides communication between a first sub-chamber 44a and the upper surface of the filter cartridge whilst the aperture 42b provides communication between a second chamber 44b and the through passage of the filter cartridge.

With the primer arrangement located in the second sub-chamber 44b, actuation of the primer arrangement results in fuel being supplied to or drawn from the through passage of the filter cartridge.

By rotating the insert 38 by 180° to the position illustrated in Figure 27, the primer arrangement no longer communicates with the chamber containing the aperture 42b, and instead the primer arrangement communicates with the aperture 42a. If this aperture is drilled, the primer communicates through this aperture with the upper surface of the filter cartridge. The use of such an insert and primer arrangement obviates the requirement to correctly orientate the valve arrangement.

The embodiment illustrated in Figures 10 and 27 is intended to be modified so as to include drillings communicating with the first and second sub-chambers 44a, 44b and to permit communication between the sub-chambers in a manner similar to that described with reference to the embodiment illustrated in Figure 1 and the arrangements illustrated in Figures 2 to 8.

Any suitable technique may be used to secure the filter cartridge to the filter head, for example by using a rod extending through the central through passage of the filter arrangement and clamp means for clamping the filter cartridge to the filter head, or alternatively another technique for clamping the filter cartridge to the filter head.

The primer arrangement illustrated in Figure 11 comprises a pair of check valves 50, 52 located in the first sub-chamber 16a. The chamber 16 is closed by a rubber dome 54 which may be depressed to pressurize the fuel within the chamber 16. The second sub-chamber 16b is separated from the first sub-chamber 16a by a separate gasket or sealing member 56.

The valves 50, 52 are arranged such that when the rubber dome 54 is depressed, fuel is supplied through the valve 52 to the upper surface of the filter cartridge, fuel not being permitted to flow past the valve 50 in this direction. Upon releasing the rubber dome 54, fuel is drawn into the sub-chamber 16a through the valve 50, the valve 52 preventing fuel flow from the cartridge to the sub-chamber 16a.

Figure 11 further illustrates that as an alternative to only drilling some of the ports 24, if desired some of the ports 24 may be closed using plugs 58.

The arrangement illustrated in Figure 12 is similar to that of Figure 11, but with the rubber dome 54 replaced by a plunger type actuator 60 for use in pumping fuel through the filter to prime the fuel system.

Figures 11 and 12 show a separate gasket or sealing member 52 for separating the first and second sub-chambers 16a, 16b. As illustrated in Figure 13, the sub-chambers 16a, 16b may be separated from one another by part of the seal 62 used to seal the rubber dome 54, plunger type actuator 60 or other type of actuator to the cover 10.

The flow of fuel through the filter cartridge in the arrangements illustrated in Figures 11 and 12 is agglomerator flow. By reversing the orientation of the valves 50, 52 and the fuel connections to the cover 10, fuel flow in the reverse direction (filter flow) may be achieved.

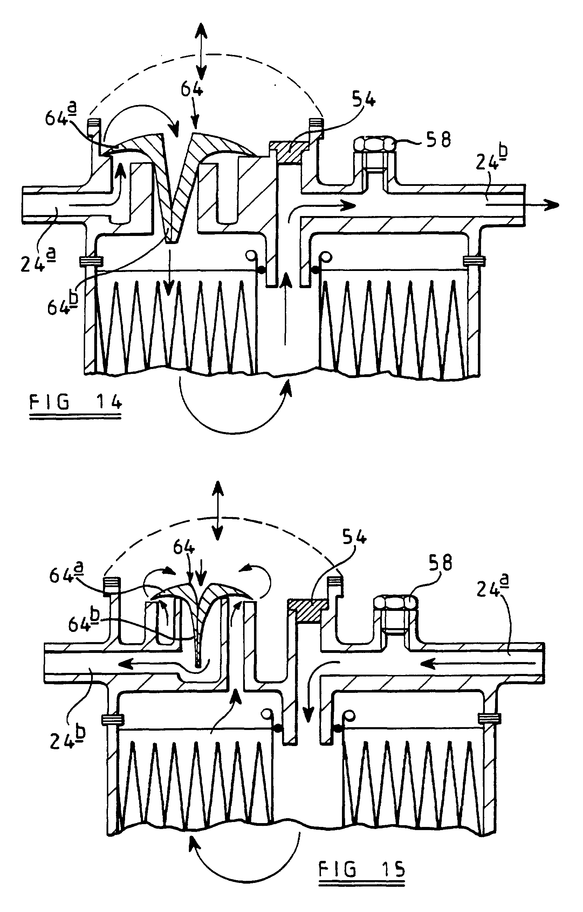

Figures 14 and 15 illustrate an alternative arrangement in which the functions of the valves 50 and 52 are performed by a single valve member 64. The valve member 64 is a duck bill valve member having an enlarged head 64a which, when orientated as in Figure 14, controls the supply of fuel from an inlet port 24a to the first sub-chamber 16a, and a central region 64b arranged to control the supply of fuel to a cartridge, the valve member 64 permitting fuel to flow from the inlet port 24a through the first sub-chamber 16a to the cartridge, but preventing fuel from flowing in the reverse direction. The arrangement of Figure 14 therefore permits agglomerator flow.

Filter flow may be achieved by modifying the arrangement of Figure 14 so that fuel from the cartridge is applied to the head 64a, the fuel passing through the central region 64b flowing to the outlet as shown in Figure 15.

Although the dashed lines in Figures 14 and 15 suggest that a rubber dome is used to actuate the primer, any suitable actuator may be used.

Figures 16a, 16b and 16c illustrate a valve assembly suitable for use in a hand primer which may be mounted in the first sub-chamber 16a of the filter head illustrated in Figure 1. The valve assembly illustrated in Figure 16a comprises a support member 30 which is of generally cylindrical form, a central region of the support 30 being substantially closed by a generally circular wall 32 the centre of which is open. A valve member 34 extends within the opening of the wall 32, the valve member 34 including an enlarged head 34a which is arranged to prevent the valve member 34 passing completely through the central opening of the wall 32, and a duck-bill region 34b which is arranged to open to permit flow of fuel therethrough in one direction and to substantially prevent the flow of fuel in an opposite direction. The head 34a and support member 30 together define a chamber 30a which communicates, in use, with an inlet or outlet part of the filter head. In Figure 16a, the direction in which fuel is permitted to flow is denoted by arrow A.

Figure 16b illustrates the valve assembly of Figure 16a located in the chamber 16 of a filter head in which the direction of flow of fuel through the filter cartridge is such as to achieve agglomerator flow. As illustrated in Figure 16b, an O-ring seal 36 is provided to seal the support member 30 to the support means located within the first sub-chamber 16a. In use, actuation of a primer actuator, for example in the form of a rubber dome, pumps fuel through the duck-bill region 34b to the filter medium, release of the actuator drawing fuel from the inlet through the chamber 30a and past the head 34a which flexes to allow fuel flow from the chamber 30a. Figure 16c illustrates the valve assembly oriented so as to achieve filter flow. In this arrangement, the chamber 30a communicates with a chamber 30b which, in turn, communicates with an outlet of the filter head. Apertures 30c are provided to allow fuel flow to the chamber 30a.

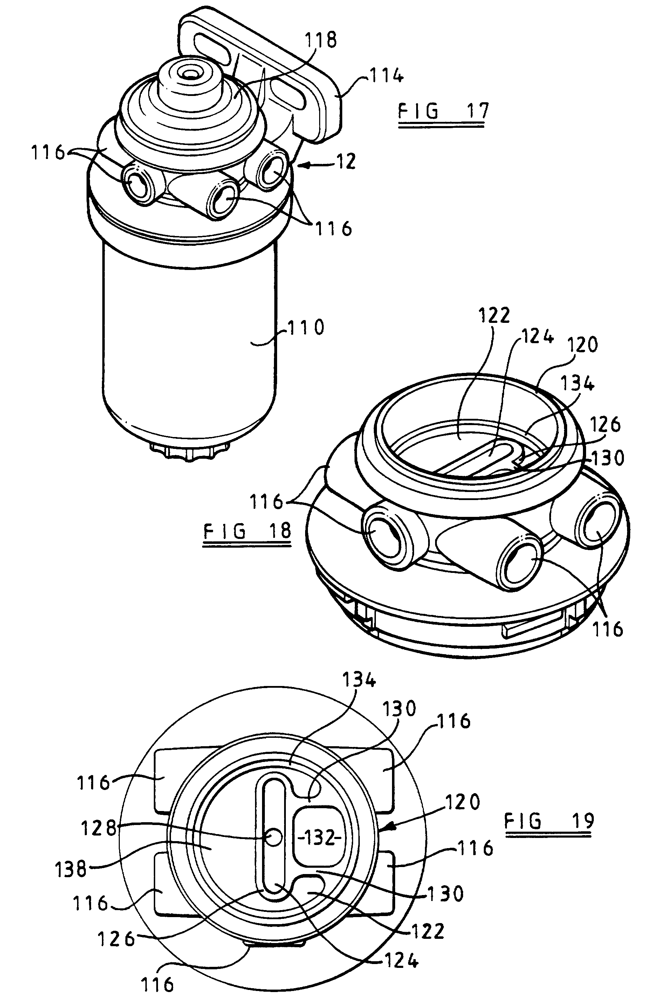

The filter assembly illustrated in Figure 17 comprises a filter cartridge 110 which is secured to a filter head assembly 112. The filter cartridge 110 houses a filter member which is arranged to remove contaminants from a flow of diesel fuel therethrough. The flow of diesel through the filter member may be in a direction extending parallel to the axis of the filter cartridge 110, or alternatively may be in a radial direction. Where the flow of fuel is in an axial direction, the upper surface of the filter cartridge includes apertures permitting fuel to enter or leave the cartridge, and the filter cartridge includes an axially extending passage whereby fuel can flow to or from the lower surface of the filter cartridge which is also apertured. In such an arrangement, the filter head assembly 112 must be able to permit communication with the axially extending passage and with the upper surface of the filter cartridge 110. Where the fuel is filtered in a radial direction, the filter cartridge 110 includes an axially extending perforated passage, and an outer annular chamber. The filter head assembly 112 communicates with the axially extending passage and with an upper chamber defined, in part, by the upper surface of the filter cartridge 110, communication being permitted between the upper chamber and the outer annular chamber. The filter head assembly 112 described in greater detail hereinafter is suitable for use with both types of filter cartridge

The filter head assembly 112 comprises a casting which includes an integral bracket 114 whereby the filter head assembly 112 and filter cartridge 110 secured thereto are mounted in position. The casting includes five ports 116, and means permitting an actuator 118 for a primer arrangement to be mounted thereon.

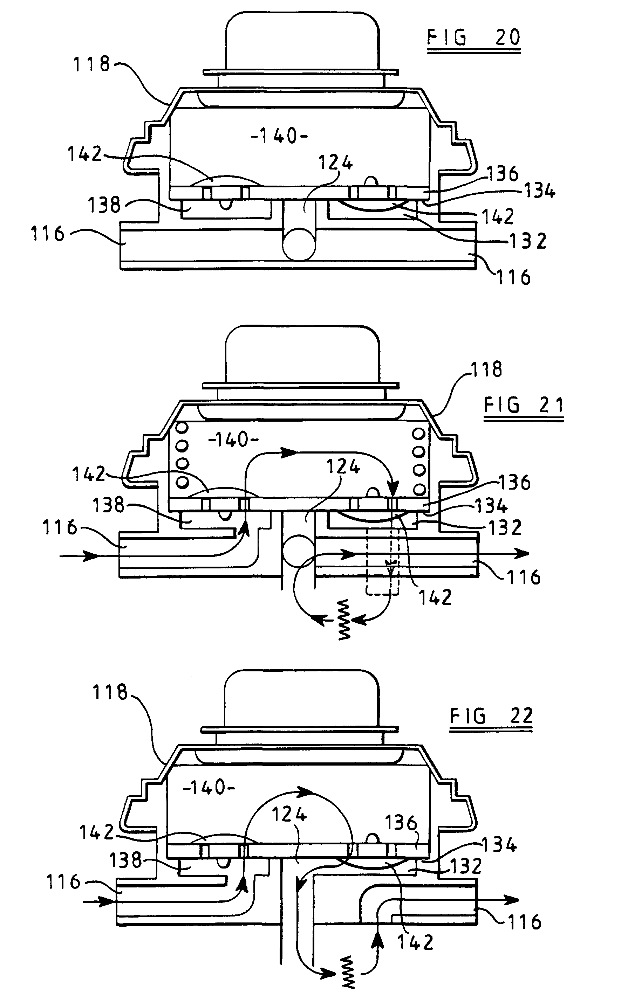

Figure 18 illustrates the filter head assembly 112 in more detail, the bracket 114 and actuator 118 being omitted from this view. As illustrated in Figure 18, the filter head assembly 112 includes a generally cylindrical wall 120 with which the ports 116 are integral, the lower end of the cylindrical wall 120 being closed by a relatively thick, integral lower wall 122. As shown in Figure 20, the lower wall 122 is aligned with the ports 116. A recess 124 is formed in the lower wall 122, and a wall 126 extends around the recess 124, the wall 126 extending above the upper surface of the lower wall 122. The lower surface of the recess 124 is provided with an opening 128 (see Figure 19) which communicates with the interior of a hollow downwardly extending projection (not shown) which, in use, communicates with the axially extending passage of the filter cartridge 110, a suitable seal, for example an O-ring, being provided in order to seal the downwardly extending projection to the axially extending passage of the filter cartridge 110. Further walls 130 are provided which connect the wall 126 surrounding the recess 124 with the cylindrical wall 120 thus defining a chamber 132. As illustrated most clearly in Figure 18, a step 134 is provided at the interconnection between the cylindrical wall 120 and the lower wall 122, the step 134 being of the same height as the wall 126 and further walls 130.

As shown in Figure 20, a partition 136 may be provided within the cylindrical wall 120, the partition 136 being mounted upon the step 134, wall 126 and the further walls 130. It will be appreciated that the partition 136 separates the interior of the cylindrical wall 120 into four chambers, the four chambers being the chamber 132, a chamber defined by the recess 124, a chamber 138 as illustrated in Figure 19 and a chamber 140 located above the partition 136. The partition 136 is provided with a pair of one way valves 142 which, as illustrated in Figure 20, are arranged to permit flow in opposite directions such that one of the one way valves 142 permits fuel to flow from the chamber 138 to the chamber 140, the other of the one way valves 142 permitting fuel to flow from the chamber 140 to the chamber 132. Where the actuator 118 for the primer is provided, if the actuator 118 is depressed, the volume of the chamber 140 is reduced, thus increasing the pressure of the fuel in the chamber 140 resulting in fuel flowing through the one way valve 142 to the chamber 132. Subsequent release of the actuator 118 results in the actuator 118 returning to its original position, for example under the action of a spring, reducing the pressure within the chamber 140 resulting in fuel flowing to the chamber 140 through the one way valve 142 from the chamber 138.

As mentioned earlier, each of the ports 116 is located adjacent the lower wall 122, and as illustrated in Figure 20 if a drilling is provided coaxially with any one of the ports 116, the drilling will extend into the recess 124 thus permitting communication between that port 116 and the recess 124. Further, if a vertical drilling is provided which communicates with any one of the ports 116, the drilling will permit communication between that port 116 and the chamber 138. It will be appreciated, therefore, that any one of the ports 116 can be made to communicate with the recess 124, and any one of the ports 116 can be made to communicate with the chamber 138.

If a drilling is provided whereby communication is permitted between the chamber 132 and the upper surface of the filter cartridge 110, then it will be appreciated that by connecting one of the ports 116 to a source of fuel, that port 116 being connected by way of a vertical drilling with the chamber 138, and by connecting another of the ports 116 to a suitable fuel pump, that port 116 being connected by a horizontally extending drilling to the recess 124, then fuel is permitted to flow from the source of fuel through the chamber 138, chamber 140 and chamber 132 to the upper surface of the filter cartridge 110. The fuel then passes through the filter member and returns through the axially extending passage of the filter cartridge to the recess 124 from where the fuel is supplied to the fuel pump. Such a flow path is illustrated in Figure 21. The flow of fuel in this direction through the filter member is referred to as agglomerator flow. It will be appreciated that if priming is required, depression and subsequent release of the actuator 118 causes fuel to flow through the filter to achieve such priming.

Figure 22 illustrates how the filter head assembly 112 may be modified so as to be used where flow is required through the filter cartridge in the reverse direction to that shown in Figure 21, fuel flow in this direction being known as filter flow. In this arrangement, as in the arrangement illustrated in Figure 21, one of the inlet ports 116 communicates through a vertically extending drilling with the chamber 138. As described hereinbefore, a primer arrangement is provided whereby fuel can be supplied from the chamber 138 to the chamber 132. In this arrangement, the vertically extending drilling from the chamber 132 to the upper surface of the filter cartridge 110 is not provided, and instead an opening is provided in the wall 126 whereby communication is permitted between the chamber 132 and the recess 124. It will be appreciated, therefore, that fuel from the fuel source is supplied to the axially extending passage of the filter cartridge 110. A vertically extending drilling is provided in the underside of the filter head 112, this drilling communicating with one of the ports 116 whereby fuel from the clean side of the filter cartridge can flow from the upper surface of the filter cartridge 110 to one of the ports 116 and from there to a suitable pump.

As an alternative to the arrangement illustrated in Figure 22 in which an opening is provided in the wall 126 to permit communication between the chamber 132 and the recess 124, the opening may be omitted and instead the partition 136 may be modified so as to include a channel or recess providing a flow path between the chamber 132 and the recess 124.

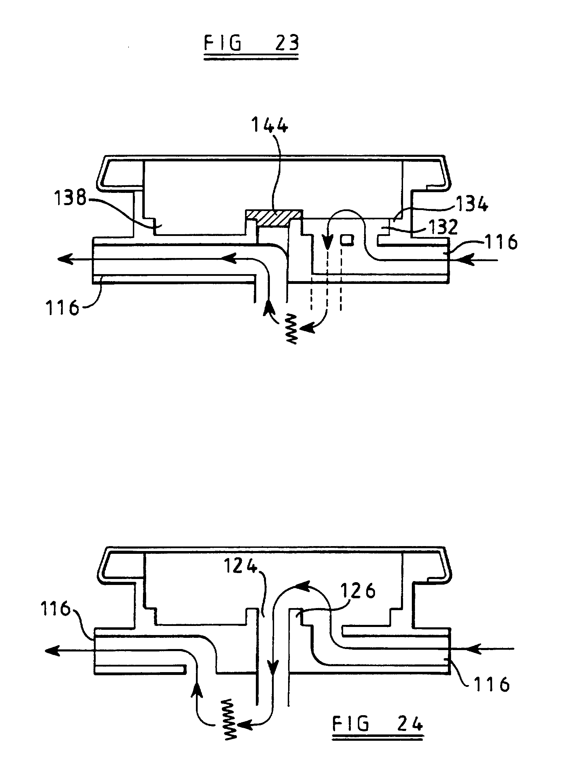

The arrangement illustrated in Figure 23 is intended to achieve agglomerator flow through the filter cartridge 110 where priming is not required. In this embodiment the actuator 118 is omitted, and in addition the partition 136 containing the one way valves 142 is omitted. It will be appreciated that in the absence of the partition 136, communication is permitted between the chamber 138 and the chamber 132. In order to prevent direct communication between the chamber 138 and the recess 124, a sealing cap 144 is provided on the wall 126. The drillings necessary for the head 112 to be used in this way are the same as those shown in Figure 21, although it will be appreciated that the choice of ports 116 to be connected to the source of fuel and suitable pump is dependent upon the particular fuel system with which the filter head 112 is to be used.

In use, fuel flows to the filter head 112 through one of the ports 116, and through a vertically extending drilling into the chamber 138. As the partition 136 is not present, the fuel is able to flow directly to the chamber 132 and from there to the upper surface of the filter cartridge 110. It will be appreciated that the further walls 130 may be omitted where the filter head 110 is to be used in this manner.

The fuel flows through the cartridge from the upper surface thereof to the axially extending passage and is returned to the recess 124 through the opening 128, and from the recess 124 to the port 116 which communicates therewith.

Figure 24 illustrates an arrangement in which filter flow is achieved where a primer is not required. The flow path through the filter head 112 is similar to that shown in Figure 22, but as priming is not required, and hence the partition 136 is not present, there is no need to provide the opening in the wall 126, fuel being able to flow directly from the chamber 138 to the recess 124 and from there to the axially extending passage of the filter cartridge 110, fuel escaping from the upper surface of the filter cartridge 110 through a vertically extending drilling provided in the lower surface of the filter head 112 as described with reference to Figure 22.

Although the description hereinbefore of possible fuel circuits through the filter head 112 only refer to the flow of fuel from a reservoir to a fuel pump, it will be appreciated that return fuel may be supplied to any of the ports 116 not already in use to either the clean side or dirty side of the filter, and further any one of the ports 116 may be connected to provide a return fuel line to the fuel tank and to provide a vent whereby air may be removed from the filter head 112.

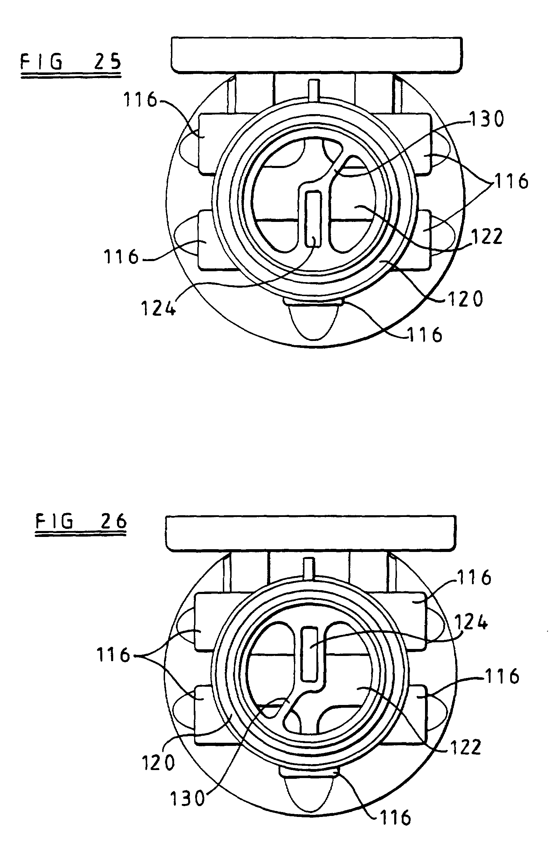

The embodiment illustrated in Figure 25 differs from that of Figures 17 to 24 in that the recess 124 is not located centrally within the chamber defined by the cylindrical wall 120, and instead is offset towards one side thereof. It will be appreciated that with the recess 124 so located, direct communication between the recess 124 and two of the ports 116 is not possible in the manner described hereinbefore, horizontal drilling of those ports not resulting in a direct connection between the recess 124 and those ports 116.

The relocation of the recess 124 towards one side of the chamber defined by the cylindrical wall 120 removes the requirement to provide two further walls 130 in order to define the chamber 132, and instead only one further wall 130 is required.

As two of the ports 116 are not capable of being connected to the recess 124, the part of the lower wall 122 adjacent those ports 116 is vertically aligned with the base of the recess 124 thus reducing the thickness of the lower wall 122 which may result in a simplified moulding process.

Although as described hereinbefore two of the ports 116 are not capable of direct communication with the recess 124, it will be appreciated that three of the ports are capable of connection to the recess 124 by providing horizontal drillings, and communication between four of the ports 116 and the chambers 132, 138 may be achieved by providing vertically extending drillings.

Figure 26 illustrates an arrangement similar to that of Figure 25 but in which the recess 124 is located so as to permit direct communication between the recess 124 and the two ports 116 which are not capable of communication with the recess 124 in the arrangement illustrated in Figure 25.

In both of the embodiments illustrated in Figures 25 and 26, a range of possible flow paths are permissible through the filter head, the selection of flow path being dependent upon the intended use of the filter head.

Manufacture of the embodiments illustrated in Figures 25 and 26 may be achieved using a single die having a core pin which is capable of being moved to permit casting of the filter head with the recess 124 in either of the position shown in Figure 25 or the position shown in Figure 26. It will be appreciated, therefore, that the tooling requirements necessary to provide filter heads capable of being used in a variety of different fuel flow paths are reduced.

## Claims

1. A filter head for use with a filter cartridge, the filter head comprising a plurality of ports (24;116), a first chamber (16a;132) and a second chamber (16b), the second chamber (16b) being arranged to communicate with an axially extending passage of the filter cartridge,
**characterised in that** the filter head comprises means in a region located beneath the first chamber (16a;132) which is adaptable to permit selective communication between the first chamber (16a;132) and a surface of the cartridge, selective communication between at least one of the ports (24;116) and the first chamber (16a;132), and selective communication between at least one of the ports (24;116) and the second chamber.

2. A filter head as claimed in Claim 1, and further comprising means for permitting selective communication between the first chamber (16a;132) and the second chamber (16b).

3. A filter head as claimed in Claim 1 or Claim 2, wherein the region is provided with a drilling where communication is required between the first chamber (16a;132) and the associated surface of the cartridge, the drilling being omitted where said communication is not required.

4. A filter head as claimed in any of Claims 1 to 3, wherein the region is provided with a drilling where communication is required between at least one of the ports (24;116) and the first chamber (16a;132), the drilling being omitted where communication is not required.

5. A filter head as claimed in any of Claims 1 to 4, wherein the region is provided with a drilling where communication is required between at least one of the ports (24;116) and the second chamber, the drilling being omitted where communication is not required.

6. A filter head as claimed in any of Claims 1 to 5, further comprising a primer arrangement.

## Patentansprüche

1. Filterkopf zur Verwendung mit einer Filterpatrone, wobei der Filterkopf eine Vielzahl von Öffnungen (24; 116), eine erste Kammer (16a; 132) und eine zweite Kammer (16b) umfasst, wobei die zweite Kammer (16b) angeordnet ist, um mit einem sich axial erstreckenden Durchgang der Filterpatrone zu kommunizieren,
**dadurch gekennzeichnet, dass** der Filterkopf eine Einrichtung in einem unterhalb der ersten Kammer (16a; 132) angeordneten Bereich umfasst, die dafür ausgelegt ist, um eine selektive Kommunikation zwischen der ersten Kammer (16a; 132) und einer Oberfläche der Patrone, eine selektive Kommunikation zwischen wenigstens einer der Öffnungen (24; 116) und der ersten Kammer (16a; 132) und eine selektive Kommunikation zwischen wenigstens einer der Öffnungen (24; 116) und der zweiten Kammer zu ermöglichen.

2. Filterkopf nach Anspruch 1, ferner umfassend eine Einrichtung, um eine selektive Kommunikation zwischen der ersten Kammer (16a; 132) und der zweiten Kammer (16b) zu ermöglichen.

3. Filterkopf nach Anspruch 1 oder Anspruch 2, wobei der Bereich mit einer Bohrung versehen ist, wo eine Kommunikation zwischen der ersten Kammer (16a; 132) und der zugehörigen Oberfläche der Patrone benötigt wird, wobei die Bohrung weggelassen wird, wo die Kommunikation nicht benötigt wird.

4. Filterkopf nach einem der Ansprüche 1 bis 3, wobei der Bereich mit einer Bohrung versehen ist, wo eine Kommunikation zwischen wenigstens einer der Öffnungen (24; 116) und der ersten Kammer (16a; 132) benötigt wird, wobei die Bohrung weggelassen wird, wo eine Kommunikation nicht benötigt wird.

5. Filterkopf nach einem der Ansprüche 1 bis 4, wobei der Bereich mit einer Bohrung versehen ist, wo eine Kommunikation zwischen wenigstens einer der Öffnungen (24; 116) und der zweiten Kammer benötigt wird, wobei die Bohrung weggelassen wird, wo eine Kommunikation nicht benötigt wird.

6. Filterkopf nach einem der Ansprüche 1 bis 5, ferner umfassend eine Vorladeanordnung.

## Revendications

1. Tête pour filtre à utiliser avec une cartouche filtrante, la tête pour filtre comprenant plusieurs orifices (24; 116), une première chambre (16a; 132) et une deuxième chambre (16b), la deuxième chambre (16b) étant arrangé de façon à communiquer avec un passage de la cartouche filtrante s'étendant en direction axiale,
**caractérisée en ce que** la tête pour filtre comprend un moyen, dans une zone située en dessous de la première chambre (16a; 132), qui peut être adapté pour permettre une communication sélective entre la première chambre (16a; 132) et une surface de la cartouche, une communication sélective entre au moins un des orifices (24; 116) et la première chambre (16a; 132), et une communication sélective entre au moins un des orifices (24; 116) et la deuxième chambre.

2. Tête pour filtre selon la revendication 1, et comprenant en outre un moyen pour permettre une communication sélective entre la première chambre (16a; 132) et la deuxième chambre (16b).

3. Tête pour filtre selon la revendication 1 ou 2, dans laquelle la zone est munie d'un alésage lorsqu'une communication est requise entre la première chambre (16a; 132) et la surface associée de la cartouche, l'alésage étant omis lorsque ladite communication n'est pas requise.

4. Tête pour filtre selon l'une quelconque des revendications 1 à 3, dans laquelle la zone est munie d'un alésage lorsqu'une communication est requise entre au moins un des orifices (24; 116) et la première chambre (16a; 132), l'alésage étarit omis lorsque ladite communication n'est pas requise.

5. Tête pour filtre selon l'une quelconque des revendications 1 à 4, dans laquelle la zone est munie d'un alésage lorsqu'une communication est requise entre au moins un des orifices (24; 116) et la deuxième chambre, l'alésage étant omis lorsque ladite communication n'est pas requise.

6. Tête pour filtre selon l'une quelconque des revendications 1 à 5, comprenant en outre un arrangement d'amorçage.
